# DEMANDE DE BREVET EUROPEEN

(11) **EP 4 707 782 A1**
(43) Date de publication de la demande: **11.03.2026**
(21) Numéro de dépôt: 25201083.0
(22) Date de dépôt: 09.09.2025
(51) Int. Cl.: G01N 21/3504, G01N 33/00, G01N 21/359

(54) **OLFACTOMETRE D'ETUDE COMPORTEMENTALE DE SPECIMEN ANIMAL ET PROCEDE D'ETUDE COMPORTEMENTALE ASSOCIE**

(30) Priorité: 10.09.2024 FR 2409608
(71) Demandeur: Université de Bourgogne, 21078 Dijon Cedex (FR); Centre National de la Recherche Scientifique, 75016 Paris (FR)
(72) Inventeur: MUSSET, Olivier, 21000 DIJON (FR); PETITJEAN, Alban, 10800 SAINT-THIBAULT (FR); PERROT-MINNOT, Marie-Jeanne, 21000 DIJON (FR)
(74) Mandataire: IPAZ

(57) **Abrégé**

L'invention concerne un olfactomètre d'étude comportementale (1) de spécimen animal (8), dit olfactomètre (1). L'olfactomètre comprend au moins trois voies d'écoulement fluidique (2), dites voies (2), communiquant au moyen d'un embranchement (3), des moyens de circulation fluidique (4) agencés pour mettre en circulation au moins deux fluides, destinés à circuler chacun dans une voie distincte, dite voie d'entrée (21, 22), puis, à travers l'embranchement, dans une même voie, dite voie de mélange (23), au moins un système optique (51, 52) par voie d'entrée ; chaque système optique est agencé pour former une nappe laser (61) traversant une voie d'entrée et s'étendant sur l'ensemble d'une section de ladite voie d'entrée et un capteur optique (53, 54) par système optique ; chaque capteur optique est agencé pour détecter la nappe laser, ayant traversée une voie d'entrée, provenant d'un des systèmes optiques.

## Description

### Domaine technique

La présente invention appartient au domaine de l'étude comportementale de spécimens animal.

L'invention porte sur un olfactomètre pour l'étude comportementale de spécimens animal.

L'invention porte, en particulier, sur un olfactomètre permettant d'étudier le comportement de spécimens animal sous stimuli et/ou changements d'environnement.

### État de la technique

L'étude du comportement et des phénomènes d'apprentissage sont des sujets de grand intérêt de la biologie animale. En général ces études consistent à soumettre un spécimen vivant à des stimuli attractifs ou répulsifs en observant l'influence des conditions environnementales sur le comportement et le processus de décision.

Ce type d'étude couvre tous les organismes vivants allant des plus petits comme les insectes aux plus importants comme les humains. Certaines espèces peuvent jouer le rôle de spécimens types pour étudier, avec un très grand nombre de tests, les comportements statistiques tels que les réactions et les processus d'apprentissage.

Le spécimen « modèle » le plus connu, parmi les animaux terrestres, appartient à la famille des insectes, il s'agit de la drosophile. Si l'on recherche des spécimens caractéristiques du milieu aquatique, il est possible de s'intéresser à des espèces comme le gammare ou la daphnie.

Pour étudier le comportement des animaux soumis à des stimuli et/ou des changements d'environnement, il est nécessaire de pouvoir réaliser un très grand nombre d'expériences pour lisser la très forte variabilité des mesures. Cette variabilité importante est caractéristique de l'étude comportementale. C'est pourquoi les biologistes ont développé, et utilisent de façon courante, un dispositif d'étude couramment nommé olfactomètre.

Un but de l'invention est de proposer un olfactomètre pour l'étude comportementale de spécimen animal :
- entièrement automatisé, et/ou
- permettant de limiter la quantité de données nécessaires à l'étude comportementale, et/ou
- ne nécessitant pas, de préférence étant dépourvu, de dispositif d'acquisition d'images, et/ou
- ne nécessitant pas de traitement et/ou d'analyse d'images, et/ou
- permettant de réaliser l'étude comportementale sur des durées d'étude importantes, typiquement supérieures à 6h, et/ou
- permettant de réaliser l'étude comportementale, de préférence sur des durées d'étude importantes, sans interruption.

### Exposé de l'invention

À cet effet, l'invention concerne un olfactomètre d'étude comportementale de spécimen animal, dit olfactomètre.

L'olfactomètre comprend au moins trois voies d'écoulement fluidique, dites voies.

Les voies communiquent au moyen de ou au niveau de ou par un embranchement ou d'une connexion ou d'un nœud fluidique.

L'olfactomètre comprend des moyens de circulation fluidique.

Les moyens de circulation fluidiques sont agencés pour mettre en circulation au moins deux fluides.

Chacun des fluides est destiné à circuler dans une voie distincte, dite voie d'entrée, puis, à travers l'embranchement, dans une même voie, de préférence une unique voie, dite voie de mélange.

L'olfactomètre comprend au moins un système optique par ou pour chaque voie d'entrée.

Chaque système optique est agencé pour former une nappe laser traversant une voie d'entrée et/ou s'étendant sur l'ensemble d'une section de la voie d'entrée traversée.

L'olfactomètre comprend un capteur optique par ou pour chaque système optique.

Chaque capteur optique est agencé pour détecter la nappe laser, ayant traversée une voie d'entrée, provenant d'un des systèmes optiques.

De préférence, au moins un des au moins un deux fluides est distinct d'au moins un autre des au moins deux fluides. De préférence, chacun des au moins deux fluides est distinct de tous les autres fluides des au moins deux fluides.

De préférence, les au moins deux voies d'entrée communiquent avec la voie de mélange par l'embranchement.

De préférence, l'au moins un système optique, de préférence chaque système optique, et/ou la nappe laser associée à un système optique, de préférence chaque nappe laser associé à un système optique, est disposé en regard ou à proximité de l'embranchement.

De préférence, il peut être entendu par nappe laser : un faisceau optique un faisceau laser, de préférence un faisceau optique ou laser plan.

Il peut être entendu par faisceau laser plan ou nappe laser : un faisceau laser présentant une dimension, de préférence une dimension perpendiculaire à l'axe de propagation du faisceau, par exemple une épaisseur, inférieure à l'autre dimension, de préférence l'autre dimension perpendiculaire à l'axe de propagation du faisceau, par exemple une largeur, du faisceau.

De préférence, il est entendu par faisceau laser plan ou nappe laser : un faisceau laser présentant une épaisseur au moins dix fois inférieure, de préférence au moins vingt fois inférieure, de préférence encore au moins trente fois inférieure, de manière avantageuse au moins quarante fois inférieure et de manière préférée au moins cinquante fois inférieure à la largeur du faisceau laser.

De préférence, la présence d'au moins un système optique par voie d'entrée (contrairement à l'utilisation de caméras ou de dispositifs optiques agencés pour acquérir des flux d'images ou des vidéos) et/ou la formation de nappe laser traversant une voie d'entrée et/ou s'étendant sur l'ensemble d'une section de la voie d'entrée (contrairement à l'émission d'un faisceau cylindrique, sphérique ou conique) permet :
- de limiter la quantité d'informations (c'est-à-dire de données informatiques) requise pour l'analyse comportementale,
- de simplifier et/ou faciliter le traitement des données,
- d'obtenir des données simples et/ou représentatives des déplacements du spécimen, et/ou
- de permettre l'acquisition de données sur des périodes d'observation importantes.

De préférence, l'olfactomètre comprend, en outre, une unité de traitement et/ou une unité de traitement de données acquises ou provenant du capteur optique.

De préférence, l'unité de traitement est agencée et/ou configurée et/ou programmée pour détecter ou déterminer un franchissement d'une nappe laser par le spécimen à partir des données du capteur optique.

De préférence, l'unité de traitement est agencée pour :
- détecter et/ou mesurer ou enregistrer un instant ou un temps associé à :
   - un franchissement d'une nappe laser par le spécimen, et/ou
   - chaque franchissement d'une nappe laser par le spécimen, et/ou
   - un franchissement de chaque nappe laser par le spécimen, et/ou
   - chaque franchissement de chaque nappe laser, par le spécimen.

De préférence, l'olfactomètre est agencé pour et/ou destiné à recevoir un seul spécimen à la fois.

De préférence, l'olfactomètre et/ou l'unité de traitement ont pour effet de permettre la détermination de la position du spécimen.

De préférence, l'unité de traitement est, en outre, agencée et/ou configurée et/ou programmée pour déterminer, de préférence à chaque franchissement d'une nappe laser par le spécimen :
- une position de franchissement de la nappe laser par le spécimen, de préférence une position projetée sur le capteur optique, et/ou
- une dimension d'une ombre engendrée par le franchissement de la nappe laser par le spécimen, de préférence une dimension de l'ombre projetée sur le capteur optique.

De préférence, la position de franchissement de la nappe laser par le spécimen et/ou la dimension de l'ombre engendrée par le franchissement la nappe laser par le spécimen est déterminée le long d'un axe, dit axe latéral, s'étendant principalement parallèlement au capteur optique et/ou principalement parallèlement à un plan selon lequel est destinée à s'étendre la nappe laser destinée à être détectée par le capteur.

De préférence, l'axe latéral est parallèle à la largeur de la nappe laser et/ou confondu avec la nappe laser.

De préférence, il est entendu par franchissement de la nappe laser : un passage du spécimen à travers la nappe laser.

De préférence, l'unité de traitement est, en outre, agencée et/ou configurée et/ou programmée pour estimer et/ou déterminer, de préférence à partir de la position de franchissement de la nappe laser par le spécimen et/ou la dimension de l'ombre engendrée par le franchissement la nappe laser par le spécimen, une taille du spécimen.

De préférence, le capteur optique est un capteur optique linéaire.

Il peut être entendu par capteur optique linéaire, un capteur dont la longueur est supérieure à la largeur du capteur.

De préférence, le capteur linéaire comprend au moins 128 pixels selon la longueur du capteur linéaire. De préférence, le capteur linéaire comprend un ou quelques pixels, par exemple entre un et dix pixels, selon la largeur du capteur linéaire.

De préférence, selon l'invention, il est entendu par « largeur » et « longueur » d'un capteur : la largeur et la longueur de la surface de détection ou de la surface sensible du capteur.

De préférence, le capteur linéaire permet :
- de limiter encore davantage la quantité d'informations (c'est-à-dire de données informatiques) requise pour l'analyse comportementale,
- de simplifier et/ou faciliter le traitement des données,
- d'obtenir des données simples et/ou représentatives des déplacements du spécimen, et/ou
- de fiabiliser les données détectées, et/ou
- de ne pas nécessiter l'utilisation d'un éclairage des voies, et/ou
- de ne pas perturber ni troubler le comportement du spécimen.

De préférence, l'au moins un système optique, de préférence encore chaque système optique, comprend :
- un laser infrarouge, et/ou
- un ou plusieurs éléments optiques agencés pour mettre en forme le faisceau laser infrarouge en nappe laser.

De préférence, le laser infrarouge est agencé pour émettre un faisceau laser ayant une longueur d'onde supérieure ou égale à 650 nm et/ou une longueur d'onde inférieure ou égale à 1100 nm.

De préférence, le laser infrarouge permet de ne pas troubler le comportement du spécimen (notamment car les spécimens animaux sont insensibles au infrarouges).

De préférence, le ou les éléments optiques permettent d'utiliser des laser bon marché, de préférence tout en permettant l'obtention d'une nappe laser.

De préférence :
- le laser infrarouge présente une puissance inférieure ou égale à 50 mW, et/ou
- la nappe laser, traversant la voie d'entrée, présente une irradiance inférieure ou égale à 100 mW/cm².

De préférence, cet aspect de l'invention permet de ne pas troubler le comportement du spécimen (notamment car les spécimens animaux sont sensibles à la lumière et/ou l'intensité de la lumière).

De préférence, cet aspect permet, en outre, pour améliorer le rapport signal sur bruit du signal détecté par le capteur optique.

De préférence, le laser infrarouge présente une puissance inférieure ou égale à 50 mW, de préférence à 40, de préférence encore à 30, de manière avantageuse à 20, de manière particulièrement avantageuse à 10 et de manière tout particulièrement avantageuse inférieure ou égale à 5mW.

De préférence, le laser infrarouge présente une puissance supérieure ou égale à 1 mW.

De préférence, la nappe laser, traversant la voie d'entrée, présente une irradiance inférieure ou égale à 200 mW/cm², de préférence à 140, de préférence encore à 100, de manière avantageuse à 70, de manière particulièrement avantageuse à 40 et de manière tout particulièrement avantageuse inférieure ou égale à 20 mW/cm².

De préférence, la nappe laser, traversant la voie d'entrée, présente une irradiance supérieure ou égale à 20 mW/cm².

De préférence, l'olfactomètre comprend un filtre optique par capteur optique.

De préférence, le filtre optique est agencé pour filtrer (ou pour couper) les longueurs d'onde inférieures ou égale à 650 nm. De préférence, le filtre optique est transparent aux longueurs d'onde supérieures ou égale à 650 nm.

De préférence, cet aspect permet :
- d'améliorer le rapport signal sur bruit du signal détecté par le capteur, et/ou
- de ne pas détecter le signal provenant de la luminosité ambiante et/ou de l'éclairage ambiant.

De préférence, l'olfactomètre comprend un ou plusieurs capteur(s) optique(s) agencé(s) pour mesurer une valeur d'un éclairement lumineux ambiant ou extérieur pénétrant dans une ou plusieurs des voies et/ou agencé(s) pour réaliser une mesure colorimétrique de la lumière et/ou de l'éclairage ambiant(e) ou extérieur(e).

De préférence, cet aspect permet de prendre en compte et/ou étudier l'effet de la lumière et/ou de l'éclairage ambiant(e) ou extérieur(e).

De préférence, l'olfactomètre comprend au moins une paire, de préférence une paire ou une seule paire, de systèmes optiques par voie d'entrée.

De préférence, chaque paire de systèmes optiques est agencée pour que :
- les deux nappes laser formées soient confondues dans la voie d'entrée, et/ou
- un axe de propagation de l'une des deux nappes lasers soit perpendiculaire à un axe de propagation de l'autre des deux nappes lasers.

De préférence, l'utilisation d'une paire de systèmes optique par voie d'entrée permet d'améliorer la localisation de la position de franchissement et/ou la dimension et/ou la taille du spécimen.

De préférence, l'au moins un système optique comprend, en outre, un ou plusieurs éléments optiques supplémentaires.

De préférence, pour chaque système optique, le ou les éléments optiques supplémentaires sont disposés entre la voie d'entrée et le capteur optique, agencés pour remettre en forme et/ou redimensionner la nappe laser ayant traversée la voie d'entrée.

De préférence, les moyens de circulation fluidique sont agencés pour injecter les au moins deux fluides chacun à une extrémité, dite extrémité distale, d'une voie d'entrée distincte.

De préférence, l'olfactomètre comprend un dispositif brise vagues par voie d'entrée.

De préférence, le dispositif brise vagues est disposé :
- dans ladite voie d'entrée, en vis-à-vis de l'extrémité distale, ou
- en aval des moyens de circulation fluidiques, et/ou
- en amont de ladite extrémité distale.

De préférence, le dispositif brise vagues est agencé pour atténuer et/ou supprimer les vagues dans les voies.

De préférence, le dispositif brise vagues permet de ne pas troubler le comportement du spécimen (notamment les spécimens sensibles ou ne vivant pas dans des zones turbulentes et/ou avec vagues).

De préférence, dans la présente demande, les termes « aval » et « amont » sont définis relativement ou par rapport au sens d'écoulement des fluides dans l'olfactomètre, en particulier de l'écoulement des fluides dans les voies.

**De** préférence, l'olfactomètre comprend :
- une évacuation d'un mélange des au moins deux fluides située à une extrémité, dite extrémité distale, de la voie de mélange, et/ou
- une paroi, de préférence une paroi fixe, perméable aux fluides, empêchant le spécimen d'accéder à l'évacuation et/ou à l'extrémité distale de la voie de mélange.

Il peut être entendu par « proximal » : la partie d'une voie située du côté ou à proximité de l'embranchement.

Il peut être entendu par « distal » : la partie d'une voie située du côté opposé à ou à l'extrémité opposée de l'embranchement.

Dans la présente demande, il peut être entendu par « perméable aux fluides » : laissant passer ou permettant l'écoulement des fluides, par exemple une paroi ou une plaque comprenant des trous traversants ou des pores, de préférence sans opposer de résistance, ou peu de résistance à l'écoulement des fluides, ou provoquant peu de pertes de charges, et/ou sans modifier, ou en modifier peu, le débit et/ou le flux d'écoulement des fluides.

De préférence, l'évacuation est une évacuation par trop plein.

De préférence, l'évacuation par trop plein :
- permet de conserver une hauteur constante, et/ou
- permet de s'affranchir de régulation de débit des fluides, et/ou
- permet de conserver une hauteur constante quel que soit le débit de fluides.

De préférence, un fond de la voie de mélange est, en tout ou partie, incliné de sorte qu'une section de ladite voie de mélange diminue dans le sens de la circulation des fluides dans ladite voie de mélange.

De préférence, l'agencement du fond de la voie de mélange permet d'éviter la concentration d'odeur(s) et/ou de l'un des fluides dans une même zone de la voie de mélange.

De préférence, l'olfactomètre, de préférence encore la voie de mélange, comprend un compartiment d'acclimatation.

De préférence, le compartiment d'acclimatation est perméable aux fluides.

De préférence, le compartiment d'acclimatation est agencé pour recevoir et/ou contenir le spécimen.

De préférence, le compartiment d'acclimatation comprend une trappe mobile.

De préférence, la trappe mobile est perméable aux fluides.

De préférence, la trappe mobile est agencée pour fermer et ouvrir, sélectivement, le compartiment d'acclimatation de sorte à :
- en position fermée, enfermer le spécimen dans la chambre d'acclimatation, et/ou
- en position ouverte, permettre au spécimen d'accéder à l'embranchement et/ou aux au moins deux voies d'entrée.

De préférence, le compartiment d'acclimatation est délimité dans sa partie distale par la paroi fixe.

De préférence, le compartiment d'acclimatation est délimité dans sa partie proximale par la paroi mobile.

Selon l'invention, il est proposé également un procédé d'étude comportementale de spécimen animal, dit procédé.

Le procédé comprend les étapes consistant à :
- mettre en circulation au moins deux fluides :
   - chacun dans une voie d'entrée distincte, puis
   - mélanger les au moins deux fluides dans la voie de mélange.
- pour chaque voie d'entrée, former au moins une nappe laser, et pour chaque voie d'entrée considérée ladite nappe laser :
   - traverse la voie d'entrée considérée,
   - s'étend sur l'ensemble d'une section de la voie d'entrée considérée,
- détecter chaque nappe laser ayant traversée une voie d'entrée.

De préférence, l'olfactomètre selon l'invention convient, de préférence encore est particulièrement adaptée, de manière davantage préférée est conçue et de manière particulièrement avantageuse est spécialement conçue, pour mettre en œuvre le procédé d'étude comportementale. Aussi toute caractéristique de l'olfactomètre selon l'invention est directement transposable au procédé de d'étude comportementale de spécimen animal.

### Brève description des FIGURES

L'invention sera mieux comprise à la lecture de la description qui va suivre, donnée uniquement à titre d'exemple non limitatif et faite en se référant aux dessins annexés sur lesquels :
- la FIGURE 1 est une représentation schématique d'un mode de réalisation de l'olfactomètre selon l'invention,
- la FIGURE 2 est une représentation schématique d'un système optique, d'une nappe laser et d'un capteur optique selon l'invention,
- la FIGURE 3 est une représentation schématique de deux systèmes optiques, formant chacun une nappe laser, et de deux capteurs optiques associés,
- la FIGURE 4 est une représentation schématique d'une section d'une voie d'entrée traversée par deux nappes lasers ainsi que deux capteurs optiques,
- la FIGURE 5 est une représentation schématique des moyens de circulation fluidique selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

### Description détaillée des FIGURES

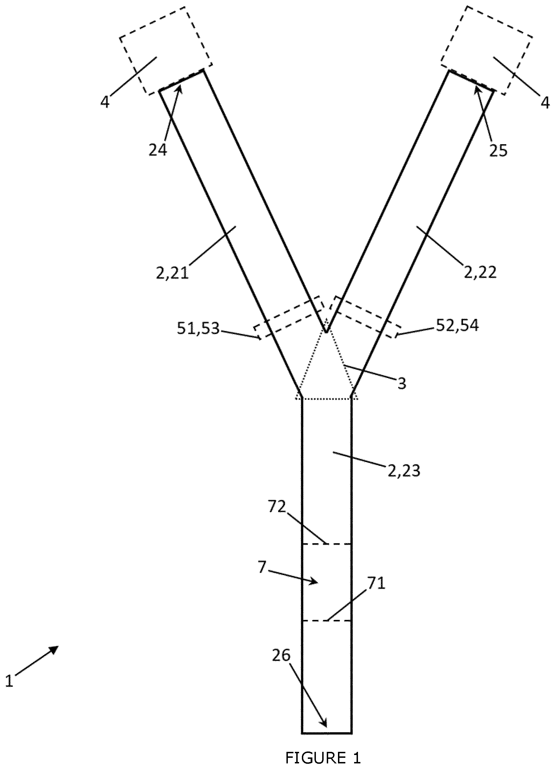

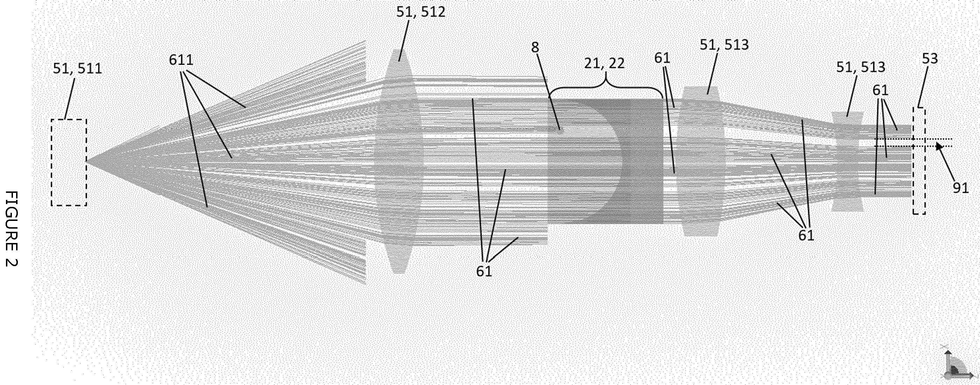

En référence, aux FIGURES 1 à 5, en particulier aux FIGURES 1 et 2, et selon un mode réalisation non limitatif, il est décrit un exemple d'un olfactomètre d'étude comportementale 1 de spécimen animal 8, dit olfactomètre 1, selon l'invention.

En référence, en particulier aux FIGURES 1 et 2, l'olfactomètre 1 comprend au moins trois voies d'écoulement fluidique 2, dites voies 2, communiquant au moyen d'un embranchement 3.

L'olfactomètre 1 comprend des moyens de circulation fluidique 4 agencés pour mettre en circulation au moins deux fluides, destinés à circuler chacun dans une voie 21, 22 distincte, dite voie d'entrée 21, 22, puis, à circuler à travers l'embranchement 3, puis à circuler dans une même voie 23, dite voie de mélange 23. Les au moins deux fluides provenant des voies d'entrée 21, 22 sont destinés à être mélangés dans la voie de mélange 23.

De préférence, chaque fluide comprend un marqueur ou indicateur (une odeur ou un polluant par exemple). Le nombre de voies d'entrée 21, 22 détermine donc le nombre de choix proposés au spécimen 8.

L'olfactomètre 1 selon l'invention convient à tout spécimen 8. Il est entendu par « spécimen animal », toutes les espèces appartenant au règne animal selon la classification biologique.

Ainsi, les voies 2 peuvent être fermées et/ou hermétiques lorsque les fluides sont gazeux. L'utilisation de fluides gazeux convient particulièrement aux spécimens 8 terrestres. A titre d'exemples non limitatifs, les spécimens 8 terrestres peuvent être des arthropodes 8, en particulier des insectes 8, notamment des drosophiles 8 qui appartiennent à une famille d'intérêt, ou des tétrapodes 8.

Les voies 2 peuvent être ouvertes (notamment sur la partie supérieure ou le haut des voies 2) lorsque les fluides sont liquides. L'utilisation de fluides liquides convient particulièrement aux spécimens 8 aquatiques. A titre d'exemples non limitatifs, les spécimens 8 aquatiques peuvent être des crustacés 8, en particulier des amphipodes 8, notamment des gammares 8 qui appartiennent à une famille d'intérêt, ou des poissons 8.

Dans tous les cas, les voies 2 et/ou l'olfactomètre 1 est agencé pour que le spécimen 8 ne puisse pas sortir des voies 2. Ainsi, le spécimen 8 ne peut se déplacer que dans les voies 2.

L'olfactomètre 1 comprend trois voies 2 selon le mode de réalisation. L'olfactomètre 1 comprend deux voies d'entrée 21, 22 et une voie de mélange 23. Quelque que soit le nombre de voies d'entrée 21, 22, l'olfactomètre 1 comprend une seule et/ou unique voie de mélange 23. Toutefois, l'invention prévoit que l'olfactomètre 1 puisse comprendre quatre ou cinq voies 2. Autrement dit, l'invention prévoit que l'olfactomètre 1 comprenne trois ou quatre voies d'entrée 21, 22 et une voie de mélange 23.

L'olfactomètre 1 comprend au moins un système optique 51, 52 par voie d'entrée 21, 22. Chaque système optique 51, 52 est agencé pour former une nappe laser 61 traversant une voie d'entrée 21, 22. La nappe laser 61 s'étend sur l'ensemble d'une section de la voie d'entrée 21, 22.

Typiquement, la nappe laser 61 présente :
- une longueur supérieure ou égale à 10 mm, de préférence à 15, de préférence encore à 17,5, de manière avantageuse à 20, de manière particulièrement avantageuse à 22,5, de manière tout particulièrement avantageuse à 25, de manière préférée à 27,5, de manière encore préférée supérieure ou égale à 30 mm, et/ou
- une largeur inférieure ou égale à 5 mm, de préférence à 4, de préférence encore à 3, de manière avantageuse à 2 et de manière particulièrement avantageuse inférieure ou égale à 1 mm.

L'olfactomètre 1 comprend un capteur optique 53, 54 par système optique 51, 52. Chaque capteur optique 53, 54 est agencé pour détecter la nappe laser 61, ayant traversée une voie d'entrée 21, 22, provenant d'un des systèmes optiques 51, 52.

Avantageusement, le capteur optique 53, 54 s'étend, et/ou est agencé et/ou disposé et/ou positionné pour s'étendre, parallèlement à un plan selon lequel s'étend ou selon lequel est destinée à s'étendre la nappe laser 61 que la capteur optique 53, 54 est destiné à détecter.

Avantageusement, pour un système optique 51, 52 considéré, le système optique 51, 52 considéré et/ou la voie d'entrée 21, 22 associée ou correspondante sont agencés, de préférence les uns relativement aux autres, de sorte que l'axe central ou médian de la nappe laser 61 intersecte le centre de la voie d'entrée 21, 22 associée.

Avantageusement, pour un système optique 51, 52 considéré, le système optique 51, 52 considéré et/ou le capteur optique 53, 54 associé ou correspondant sont agencés, de préférence les uns relativement aux autres, de sorte que l'axe central ou médian de la nappe laser 61 intersecte le centre du capteur optique 53, 54 associé.

Avantageusement, pour un système optique 51, 52 considéré, le système optique 51, 52 considéré et/ou la voie d'entrée 21, 22 associée ou correspondante sont agencés, de préférence les uns relativement aux autres, de sorte que la largeur de la nappe laser 61 associée ou correspondante soit égale ou supérieure à la section de voies d'entrée 21, 22 associée.

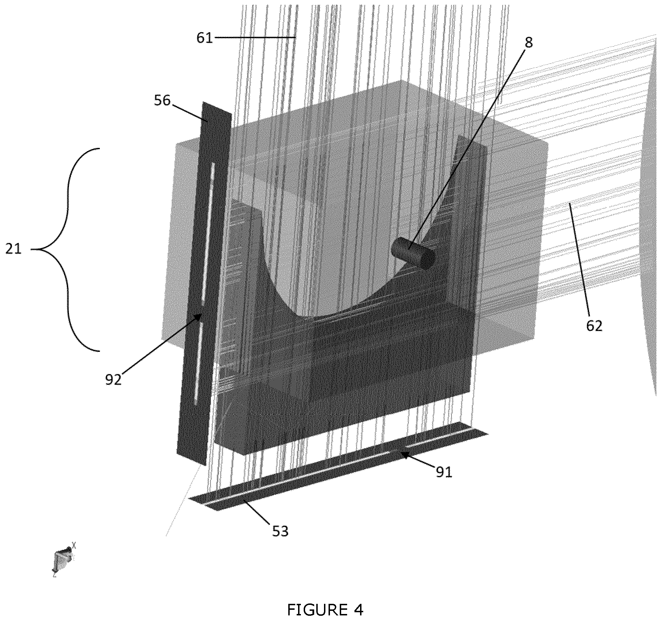

Selon une amélioration de l'invention, et en référence à la FIGURE 4, le capteur optique 53, 54 est un capteur optique linéaire 53, 54.

Selon le mode de réalisation, le capteur optique linéaire 53, 54 comprend un pixel selon sa largeur. Selon le mode de réalisation, le capteur optique linéaire 53, 54 comprend 3000 pixels selon sa longueur. Toutefois, il est prévu selon l'invention que le capteur linéaire 53, 54 comprenne quelques pixels selon sa largeur (par exemple moins d'une dizaine de pixels) et plus de cent pixels selon sa longueur (par exemple 128 ou 256 pixels mais de préférence plus de 512 pixels).

Selon une amélioration de l'invention, chaque système optique 51, 52 comprend un laser infrarouge 511 agencé pour émettre un faisceau laser infrarouge 611. Selon le mode de réalisation le faisceau laser 611 a une longueur d'onde comprise entre 650 et 1100 nm.

Selon une amélioration de l'invention, l'au moins un système optique 51, 52 comprend un ou plusieurs éléments optiques 512 agencés pour mettre en forme le faisceau laser infrarouge 611 en nappe laser 61.

Selon une amélioration de l'invention, l'au moins un système optique 51, 52 comprend un ou plusieurs éléments optiques supplémentaires 513, de préférence par ou pour chaque nappe laser 61, disposés entre la voie d'entrée 21, 22 et le capteur optique 53, 54. L'élément optique supplémentaire 513 est agencé pour remettre en forme et/ou redimensionner la nappe laser 61 ayant traversée la voie d'entrée 21, 22.

L'élément optique supplémentaire 513 permet, par exemple, d'adapter la dimension de la nappe laser 61, ayant traversée la voie d'entrée 21, 22, à la dimension du capteur optique 53, 54, c'est-à-dire permet que la nappe laser redimensionnée 61 soit détectée (dans son ensemble) par le capteur optique 53, 54.

Chaque nappe laser 61, 62 et/ou les systèmes optiques 51, 52 et/ou l'élément optique supplémentaire 513 est agencé pour que la largeur de la nappe laser 61, 62 soit inférieure à la largeur du capteur optique 53, 54 de sorte que l'ensemble de la nappe laser 61, 62 soit détectée par le capteur optique 53, 54.

Avantageusement, le laser infrarouge 511 présente une puissance inférieure ou égale à 50 mW. La puissance du laser infrarouge 511 est inférieure ou égale à 10 mW selon le mode de réalisation non limitatif.

Avantageusement, la nappe laser 61, traversant la voie d'entrée 21, 22, présente une irradiance inférieure ou égale à 200 mW/cm².

L'utilisation d'une puissance et/ou d'une irradiance dans les gammes selon l'invention permet de ne pas troubler ni influencer le spécimen tout en apportant un rapport signal sur bruit (c'est-à-dire le signal détecté par le capteur optique 53, 54, 56) suffisant pour la détection.

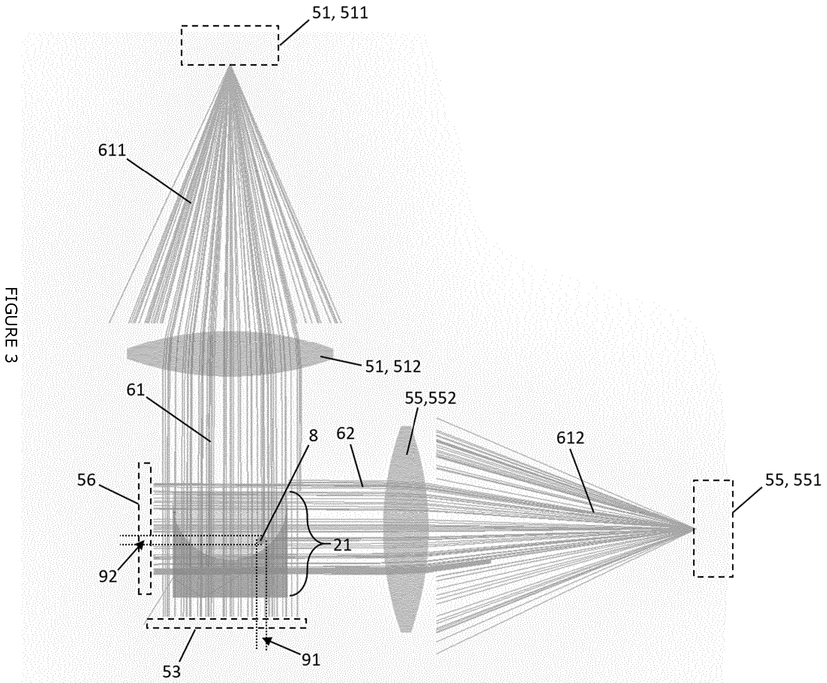

En référence aux FIGURES 3 et 4, et de manière avantageuse, l'olfactomètre 1 comprend au moins une paire 51-55 de systèmes optiques 51, 55 par voie d'entrée 21, 22. Chaque système optique 51, 55 d'une paire 51-55 de systèmes optiques 51, 55 émet une nappe laser 61, 62 distincte.

En pratique, chaque systèmes optiques 51, 52 comprend un laser 511, 551. Chaque laser 511, 551 émet un faisceau laser 611, 612. Chaque faisceau laser 611, 612 est mis en forme par un élément optiques 512, 552 pour former une nappe laser 61, 62.

L'olfactomètre 1 et/ou les systèmes optiques 51, 55 de l'olfactomètre 1, est agencé pour que les deux nappes laser 61-62 soient confondues dans la voie d'entrée 21, 22 qu'elles traversent. Pour chaque voie d'entrée 21, 22 considérée, les deux nappes laser 61-62 sont donc confondues dans une même section de la voie d'entrée 21, 22 considérée.

L'olfactomètre 1 et/ou les systèmes optiques 51, 55 de l'olfactomètre 1, est agencé pour, chaque voie d'entrée 21, 22, qu'un axe de propagation de l'une des deux nappes lasers 61, 62 soit perpendiculaire à un axe de propagation de l'autre des deux nappes lasers 62, 61.

Ainsi, le capteur optique 53 associé au système optique 51 détecte la nappe laser 61 et le capteur optique 56 associé au système optique 55 détecte la nappe laser 62. Aussi, de manière préférée, les capteurs optiques 51 et 56 sont perpendiculaires entre eux (ou le plan du capteur optique 51 est perpendiculaire au plan du capteur optique 56).

De préférence, la source laser 511, 551 (ou chaque source laser 511, 551) comprend ou coopère avec des moyens d'ajustements agencés pour translater et/ou pivoter ou modifier une orientation du faisceau laser 611, 612 et/ou la nappe laser 61, 62.

L'olfactomètre 1 peut comprendre des moyens d'ajustements agencés pour translater et/ou pivoter le capteur optique 53, 54, 56 (ou chaque capteur optique 53, 54, 56).

L'olfacomètre 1 ou le capteur optique 53, 54, 56 (ou chaque capteur optique 53, 56) peut comprendre un diaphragme disposé devant le capteur optique 53, 56. Le diaphragme comprend une fente agencée pour et/ou destinée à être alignée avec la nappe laser. Le diaphragme et/ou la fente permet de bloquer ou obturer la lumière ambiante de sorte que seul la nappe laser soit détectée par le capteur optique 53, 54, 56.

Selon le mode de réalisation, l'olfactomètre 1 comprend une évacuation d'un mélange des au moins deux fluides située à une extrémité 26, dite extrémité distale 26, de la voie de mélange 23.

Selon le mode de réalisation, l'olfactomètre 1 comprend une paroi 71, perméable aux fluides, empêchant le spécimen 8 d'accéder à l'évacuation.

Selon le mode de réalisation, la voie de mélange 23 comprend avantageusement un compartiment d'acclimatation 7. Le compartiment d'acclimatation 7 est perméable aux fluides. Le compartiment d'acclimatation 7 est agencé pour recevoir et contenir le spécimen 8 en début ou préalablement à l'observation, l'analyse ou l'étude.

Le compartiment d'acclimatation 7 comprend une trappe mobile 72 perméable aux fluides. La trappe mobile 72 étant agencée pour fermer et ouvrir, sélectivement et/ou sur commande, le compartiment d'acclimatation 7. La trappe mobile est agencée pour prendre, être positionnée dans et/ou commuter depuis une position fermée et une ouverte. Dans la position fermée, le spécimen 8 est enfermé dans la chambre d'acclimatation 7. La position fermée est maintenue en début d'étude le temps que le spécimen 8 s'acclimate à l'olfactomètre 1. Dans la position ouverte, le spécimen 8 peut accéder à librement à l'embranchement 3 et aux au moins deux voies d'entrée 21, 22. La position ouverte est maintenue durant l'étude.

Selon un mode de réalisation non limitatif, convenant particulièrement mais non limitativement aux fluides liquides, un fond de la voie de mélange 23 est, en tout ou partie, incliné de sorte qu'une section de la voie de mélange 23 diminue dans le sens de la circulation des fluides dans la voie de mélange 23.

Selon ce mode de réalisation non limitatif, la voie de mélange 23 présente une profondeur diminuant dans le sens de la circulation des fluides. Ainsi, l'ensemble du mélange de fluides de la voie de mélange 23 est contraint de s'écouler vers l'évacuation, sans stagnation dans la voie de mélange 23 (en surface ou en profondeur selon la densité des fluides).

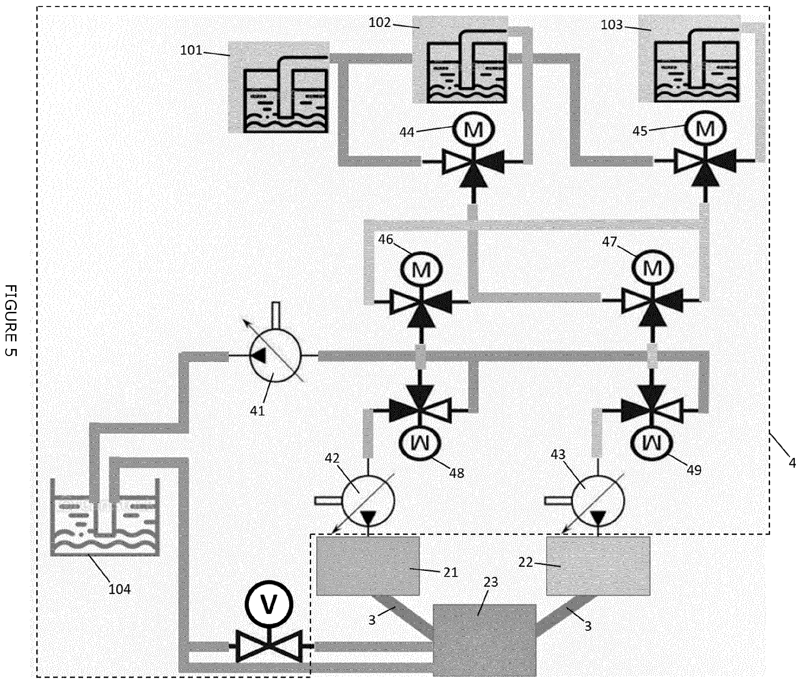

En référence à la FIGURE 5, il est illustré un mode de réalisation non limitatif des moyens de circulation fluidique 4. Les moyens de circulation fluidique 4 sont agencés pour injecter les au moins deux fluides chacun à une extrémité 24, 25, dite extrémité distale 24, 25, d'une voie d'entrée 21, 22 distincte.

Avantageusement, les extrémités distales 24, 25 des voies d'entrée 21, 22 peuvent comprendre des moyens (par exemple une paroi filtrante (trouée) ou une grille) agencés pour empêcher les spécimen 8 de se déplacer au-delà ou en amont des extrémités distales 24, 25.

Le mode de réalisation des moyens de circulation fluidique 4 présenté sur la FIGURE 5 est purement illustratif et non limitatif. L'homme du métier saura envisager toutes les variantes et équivalents permettant de mettre en circulation les au moins deux fluides.

Les moyens de circulation fluidique 4 comprennent trois réservoirs de stockage 101, 102, 103. Le réservoir 101 comprend un fluide neutre ou support, qui peut être de l'azote, si les fluides sont gazeux, ou de l'eau, si les fluides sont liquides. Les réservoirs 102 et 103 comprennent des composés d'intérêts distincts, marqueurs ou indicateurs (une odeur ou un polluant par exemple).

Les moyens de circulation fluidique 4 comprennent, en outre :
- des pompes 41, 42, 43 à liquides ou à gaz (par exemple péristaltiques ou à membranes),
- des vannes, de préférence des électrovannes, doubles voies, notées M, une vanne, de préférence une électrovanne, simple voie, notée V,
- un bac de récupération 104,
- un réseau de connecteurs fluidiques (des conduites, tuyaux ou canaux) reliant, deux à deux, les éléments des moyens de circulation entre eux.

Selon l'exemple non limitatif présenté :
- les réservoirs 101, 102, 103 sont reliés à deux vannes doubles voies 44, 45 ; selon un exemple non limitatif, les réservoirs 101 et 102 sont reliés à une vanne double voie 44 et les réservoirs 101 et 103 sont reliés à une vanne double voie 45,
- les vannes 44, 45 sont chacune reliées à deux vannes doubles voies 46, 47.

L'agencement des réservoirs 101, 102 et 103 et des vannes 44, 45, 46 et 47 permettent d'opérer des dilutions, à façon, des composés d'intérêts entre eux. Toutefois, cet agencement permet également de fournir (uniquement) le contenu d'un seul des réservoirs 101, 102 ou 103.

Selon l'exemple non limitatif présenté :
- les vannes 46, 47 sont chacune reliées à une vanne double voie distincte 48, 49,
- les vannes 48, 49 sont chacune reliées à une pompe distincte 42, 43,
- chacune des pompes 42, 43 est reliée à une voie d'entrée distincte 21, 22.

L'agencement des vannes 46, 47, 48 et 49 et des pompes 42, 43 permet d'injecter, sélectivement dans chacune des voies 21, 22, le contenu provenant des vannes 46, 47 (c'est-à-dire le fluide neutre seul, un des composés d'intérêts seul (pur ou dilué), un mélange de composés d'intérêts).

Selon l'exemple non limitatif présenté : les vannes 48, 49 sont reliées à la pompe 41 et la pompe 41 est reliée au bac de récupération 104. Cet agencement permet de purger et vidanger le contenu des connecteurs fluidiques ainsi que le contenu des voies 2 dans le bac de récupération 104.

Selon l'exemple non limitatif présenté : l'évacuation de la voie de mélange 23 est reliée à la vanne monovoie V et la vanne monovoie V est reliée au bac de récupération 104. Ainsi les fluides évacués de la voie de mélange 23 sont récupérés dans le bac de récupération. Il est à noter que le bac de récupération 10 pourrait être omis et les fluides évacués ou vidangés pourraient être rejetés directement.

En référence, en particulier, aux FIGURES 2 à 4, et selon le mode réalisation non limitatif, il est décrit un exemple d'un procédé d'étude comportementale de spécimen animal 8, dit procédé, selon l'invention.

Sur les FIGURES 2 à 4, certaines parties du faisceau laser 611,612 et des nappes laser 61, 62 ne sont pas représentées dans un souci de lisibilité des FIGURES (notamment les parties extérieures ou situées sur les côtés des faisceaux laser 611,612 et des nappes laser 61, 62).

Le procédé comprend l'étape consistant à mettre en circulation au moins deux fluides :
- chacun dans une voie d'entrée 21, 22 distincte, puis
- mélanger les au moins deux fluides dans la voie de mélange 23.

Le procédé comprend, en outre, l'étape consistant à, pour chaque voie d'entrée 21, 22, former au moins une nappe laser 61.

Le procédé comprend, en outre, l'étape consistant à détecter chaque nappe laser 61 ayant traversée une voie d'entrée 21, 22.

En référence à la FIGURE 2, en l'absence de franchissement de la nappe laser 61 (par le spécimen 8), le capteur optique 53, 54 va détecter la nappe laser 61, de préférence la nappe laser 61 dans son ensemble. Ainsi, en l'absence de rupture de la nappe laser 61 (par le spécimen 8), la nappe laser 61 est détectée, de préférence dans son ensemble, de manière continue et/ou sans discontinuité.

Le franchissement de la nappe laser 61 par le spécimen 8, va engendrer l'absence (ou l'interruption) de détection du signal de la nappe laser 61 sur une partie du capteur optique 53, 54. La partie du capteur optique 53, 54 sur laquelle l'interruption du signal est détectée correspond à la zone d'ombre 91, projetée sur le capteur optique 53, 54, induite par le franchissement de la nappe laser 61 par le spécimen 8.

Ainsi, le franchissement de la nappe laser 61 par le spécimen 8 va induire une rupture (locale) ou une discontinuité du signal détecté. Autrement dit, chaque rupture ou discontinuité du signal détecté par le capteur optique 53, 54 correspondra à un franchissement de la nappe laser 61 détecté par le capteur optique 53, 54 associé.

Ainsi, selon un aspect du procédé facultatif, le procédé peut comprendre, à partir des données des capteurs optiques 53, 54, la détermination de la localisation du spécimen 8 (en fonction du temps et en temps réel) dans l'olfactomètre 1.

A partir des données des capteurs optiques 53, 54, il peut être déterminé la localisation du spécimen 8 (en fonction du temps et en temps réel) dans une zone parmi au moins trois zones de l'olfactomètre 1. Les au moins trois zones de l'olfactomètre 1 comprennent :
- une zone correspondant à la partie des voies 2 située en aval des systèmes optiques 51, 52, en particulier en aval de la section des voies d'entrée 21, 22 traversée par leur(s) nappe(s) laser 61 associée(s),
- une zone, par voie d'entrée 21, 22, correspondant à la partie de la voie d'entrée 21, 22 située en amont du système optique 51, 52 associé, en particulier en amont de la section de la voie d'entrée 21, 22 traversées par la nappe laser 61 associée.

Le nombre de zones est égal à trois selon le mode de réalisation présenté, l'olfactomètre 1 comprend deux voies d'entrée 21, 22. De manière générale, le nombre de zones est égal au nombre de voies d'entrée 21, 22 moins un (autrement dit est égal à n-1, où n est égal au nombre de voies d'entrée 21, 22).

En outre, la position du spécimen 8 peut être déterminé à partir de la position précédente du spécimen 8 et du franchissement détecté. En effet, la position du spécimen étant connue à t=0 (le spécimen 8 est nécessairement dans le compartiment d'acclimatation 7 à t=0), la position du spécimen 8 est connu à tout instant (à partir du franchissement détecté).

Selon un aspect facultatif du procédé, le procédé peut comprendre la détermination des trajets ou mouvements du spécimen 8 dans l'olfactomètre 1 (en fonction du temps et en temps réel). Les mouvements ou trajets peuvent être déterminés à partir des données des capteurs optiques 53, 54.

L'étude comportementale en elle-même (per se), ne fait pas partie de l'invention. L'invention vise à fournir un olfactomètre 1 et un procédé permettant d'obtenir des données (données de capteurs optiques 53, 54) qui pourront être utilisées pour réaliser l'étude comportementale.

Ainsi, les données de capteurs optiques 53, 54, les informations de localisation du spécimen 8 dans l'olfactomètre 1 et/ou les mouvements ou trajets du spécimen 8 dans l'olfactomètre 1 sont simplifiées et réduites en nombres. Ainsi, des d'études sur la base des temps d'observation (c'est-à-dire le temps d'expérimentation ou le temps pendant lequel les données sont acquises) considérablement longs sont rendues possible.

Avantageusement, la position latérale (ou la position verticale) du spécimen 8 dans la voie d'entrée 21, 22 et/ou la taille du spécimen 8 est déterminée à partir de la position et/ou de la taille ou dimension (par exemple le nombre de pixels), selon la largeur du capteur optique 53, 54, de la zone d'ombre 91 projetée.

Dans la présente demande, la position de la zone d'ombre 91 projetée sur le capteur optique 53, 54 peut être définie :
- selon ou relativement à tout axe parallèle au plan de la nappe laser 61 et perpendiculaire à l'axe de propagation de la nappe laser 61, et/ou
- selon ou relativement à la largeur du capteur optique 53, 54.

Par exemple, lorsque la largeur de la nappe laser 61 est égale au diamètre de la voie d'entrée 21, 22, la position de la zone d'ombre 91 projetée sur le capteur optique 53, 54 permet de déterminer directement la position latérale du spécimen 8 dans la voie d'entrée 21, 22. Lorsque la largeur de la nappe laser 61 est supérieure à la section de la voie d'entrée 21, 22, un rapport ou ratio entre la largeur (connue) de la nappe laser 61 et le diamètre (connu) de la voie d'entrée 21, 22 (ou inversement) peut être utilisée pour déterminer la position latérale du spécimen 8 dans la voie d'entrée 21, 22. Le même raisonnement s'applique à la détermination de la taille du spécimen 8 qui est égale ou proportionnelle à la taille ou dimension (par exemple le nombre de pixels), selon la largeur du capteur optique 53, 54, de la zone d'ombre 91 projetée sur le capteur optique 53, 54.

La description de la FIGURE 2 faite ci-dessus est directement applicable et transposable aux FIGURES 3 et 4. Sur les FIGURES 3 et 4, l'olfactomètre 1 comprend une paire 51-55 de systèmes optiques 51, 55 par voie d'entrée 21, 22. Ainsi, le franchissement des nappes laser 61, 62 par le spécimen 8, va engendrer l'absence (ou l'interruption) de détection du signal sur une partie de chacun des capteurs optiques 53, 55. La partie des capteurs optiques 53, 56 sur laquelle l'interruption du signal est détectée correspond aux zones d'ombre 91, 92, respectivement projetées sur les capteurs optiques 53, 56, induites par le franchissement des nappes laser 61, 62 par le spécimen 8.

Dans ce cas, en plus de la position latérale du spécimen 8 (déduite à partir des données acquises par le capteur optique 53), la position verticale du spécimen 8 pourra être déduite à partir des données acquises par le capteur optique 56.

Ainsi, les coordonnées (c'est-à-dire la position latérale et la position verticale) de franchissement de la section de la voie d'entrée 21 par le spécimen 8 pourront être déterminées. Une meilleure précision de la position de franchissement de la section de la voie d'entrée 21 par le spécimen 8 sera obtenue. Le même constant s'applique à la détermination de la taille du spécimen 8.

Avantageusement, l'olfactomètre 1 comprend une unité de traitement et/ou une unité de stockage des données acquises par les capteurs optiques 53, 54.

Selon un aspect de l'invention, l'olfactomètre 1 comprend une unité de stockage de données. Selon cet aspect, les données acquises par les capteurs optiques 53, 54 peuvent être stockées puis transmises à et/ou traitées ultérieurement par une unité de traitement externe (ne faisant pas partie de l'olfactomètre 1).

Selon un autre aspect de l'invention, l'olfactomètre 1 comprend :
- une unité de traitement, ou
- une unité de traitement et une unité de stockage.

L'unité de traitement est agencée et/ou configurée et/ou programmée pour mettre en œuvre le procédé selon l'invention.

L'unité de traitement est agencée et/ou configurée et/ou programmée pour détecter un franchissement de l'une quelconque des nappes lasers 61 par le spécimen 8 à partir des données des capteurs optiques 53, 54.

En particulier, l'unité de traitement est agencée et/ou configurée et/ou programmée pour déterminer, le long d'un axe, dit axe latéral, s'étendant principalement parallèlement au capteur optique 53, 54 et/ou parallèlement à la nappe laser 61 destinée à être détectée par ledit capteur :
- une position de franchissement de la nappe laser par le spécimen (8), et/ou
- une dimension d'une ombre engendrée par le franchissement de la nappe laser par le spécimen 8.

Avantageusement, l'unité de traitement est, en outre, agencée et/ou configurée et/ou programmée pour estimer une taille du spécimen 8.

Avantageusement, notamment lorsque le fluide est un liquide, l'unité de traitement est agencée pour filtrer les mouvements de surface du liquide (vagues, clapotis...) par traitement du signal provenant des capteurs optiques 53, 54, 56.

Chaque aspect ou perfectionnement peut être mis en œuvre individuellement.

Chaque aspect ou perfectionnement peut être combiné avec l'un, plusieurs ou tous les autres aspects ou perfectionnements.

Bien sûr, l'invention n'est pas limitée aux exemples qui viennent d'être décrits et de nombreux aménagements peuvent être apportés à ces exemples sans sortir du cadre de l'invention.

Ainsi, dans des variantes combinables entre elles des modes de réalisation précédemment décrits :
- l'olfactomètre 1 comprend un filtre optique par capteur optique 21, 22, et/ou
- le filtre optique est agencé pour filtrer les longueurs d'onde inférieures ou égales à 650 nm, et/ou
- l'olfactomètre 1 comprend un ou plusieurs capteur(s) optique(s) supplémentaire(s) agencé(s) pour mesurer une valeur d'un éclairement lumineux ambiant ou extérieur pénétrant dans une ou plusieurs des voies 2, et/ou
- l'olfactomètre 1 comprend un ou plusieurs capteur(s) optique(s) supplémentaire(s) agencé(s) pour agencé(s) pour réaliser une mesure colorimétrique de la lumière et/ou de l'éclairage ambiant(e) ou extérieur(e), et/ou
- selon un perfectionnement optionnel, convenant particulièrement mais non limitativement aux fluides liquides, l'olfactomètre 1 comprend un dispositif brise vagues par voie d'entrée 21, 23, et/ou
- le dispositif brise vagues est disposé :
   - dans chaque voie d'entrée 21, 23 en vis-à-vis de l'extrémité distale 24, 25, ou
   - en aval des moyens de circulation fluidiques 4, et/ou
   - en amont de ladite extrémité distale, et/ou
- le dispositif brise vagues est agencé pour atténuer et/ou supprimer les vagues dans les voies 2, et/ou
- le dispositif brise vagues peut comprendre :
   - une lame ou plaque pleine s'étendant, depuis un côté (ou une face) supérieur(e) de la voie d'entrée 21, 22, en partie, dans la voie d'entrée 21, 22 (de préférence de sorte à s'étendre, en partie dans le fluide destiné à circuler dans la voie d'entrée 21, 22), et/ou
   - une grille s'étendant, depuis un côté (ou une face) inférieur(e) de la voie d'entrée 21, 22, en partie, dans la voie d'entrée 21, 22 (de préférence, de sorte à s'étendre, en partie dans le fluide destiné à circuler dans la voie d'entrée 21, 22, de préférence encore, jusqu'à la lame ou plaque pleine), et/ou
- le dispositif brise vagues est agencé pour empêcher le spécimen 8 de se déplacer au-delà ou en amont des extrémités distales 24, 25, et/ou
- le capteur optique 53, 56 peut être un capteur CCD (pour Charge-Coupled Device).

En particulier toutes les variantes et tous les modes de réalisation décrits sont combinables entre eux si rien ne s'oppose à cette combinaison sur le plan technique.

## Revendications

1. Olfactomètre d'étude comportementale (1) de spécimen animal (8), dit olfactomètre (1), ledit olfactomètre comprend :
- au moins trois voies d'écoulement fluidique (2), dites voies (2), communiquant au moyen d'un embranchement (3),
- des moyens de circulation fluidique (4) agencés pour mettre en circulation au moins deux fluides, destinés à circuler chacun dans une voie distincte, dite voie d'entrée (21, 22), puis, à travers l'embranchement, dans une même voie, dite voie de mélange (23),
- au moins un système optique (51, 52) par voie d'entrée ; chaque système optique est agencé pour former une nappe laser (61) traversant une voie d'entrée et s'étendant sur l'ensemble d'une section de ladite voie d'entrée,
- un capteur optique (53, 54) par système optique ; chaque capteur optique est agencé pour détecter la nappe laser, ayant traversée une voie d'entrée, provenant d'un des systèmes optiques.

2. Olfactomètre selon la revendication précédente, comprenant, en outre, une unité de traitement agencée et/ou configurée et/ou programmée pour détecter un franchissement d'une nappe laser (61) par le spécimen (8) à partir de données du capteur optique (53, 54).

3. Olfactomètre selon la revendication précédente, dans lequel l'unité de traitement est, en outre, agencée et/ou configurée et/ou programmée pour déterminer, le long d'un axe, dit axe latéral, s'étendant principalement parallèlement au capteur optique (53, 54) et/ou parallèlement à un plan selon lequel est destinée à s'étendre la nappe laser (61) destinée à être détectée par ledit capteur :
- une position de franchissement de la nappe laser par le spécimen (8), et/ou
- une dimension d'une ombre engendrée par le franchissement de la nappe laser par le spécimen.

4. Olfactomètre selon la revendication 2 ou 3, dans lequel l'unité de traitement est, en outre, agencée et/ou configurée et/ou programmée pour estimer une taille du spécimen (8).

5. Olfactomètre selon l'une quelconque des revendications précédentes, dans lequel le capteur optique (53, 54) est un capteur optique linéaire.

6. Olfactomètre selon l'une quelconque des revendications précédentes, dans lequel l'au moins un système optique (51, 52) comprend :
- un laser infrarouge (511) agencé pour émettre un faisceau laser (611) ayant une longueur d'onde comprise entre 650 et 1100 nm, et
- un ou plusieurs éléments optiques (512) agencés pour mettre en forme ledit faisceau laser infrarouge en nappe laser (61).

7. Olfactomètre selon la revendication précédente, dans lequel :
- le laser infrarouge (511) présente une puissance inférieure à 50 mW, et/ou
- la nappe laser (61), traversant la voie d'entrée (21, 22), présente une irradiance inférieure à 200 mW/cm².

8. Olfactomètre selon l'une quelconque des revendications précédentes, comprenant :
- un filtre optique par capteur optique (21, 22), ledit filtre optique étant agencé pour filtrer les longueurs d'onde inférieures à 650 nm, et/ou
- un ou plusieurs capteur(s) optique(s) supplémentaire(s) agencé(s) pour mesurer une valeur d'un éclairement lumineux ambiant ou extérieur pénétrant dans une ou plusieurs des voies (2) et/ou agencé(s) pour réaliser une mesure colorimétrique de la lumière et/ou de l'éclairage ambiant(e) ou extérieur(e).

9. Olfactomètre selon l'une quelconque des revendications précédentes, comprenant au moins une paire (51-55) de systèmes optiques (51, 55) par voie d'entrée (21, 22) ; chaque paire de systèmes optiques est agencée pour que :
- les deux nappes laser formées (61-62) soient confondues dans la voie d'entrée, et
- un axe de propagation de l'une des deux nappes lasers soit perpendiculaire à un axe de propagation de l'autre des deux nappes lasers.

10. Olfactomètre selon l'une quelconque des revendications précédentes, dans lequel l'au moins un système optique (51, 52) comprend, en outre, un ou plusieurs éléments optiques supplémentaires (513), disposés entre la voie d'entrée (21, 22) et le capteur optique (53, 54), agencés pour remettre en forme et/ou redimensionner la nappe laser (61) ayant traversée la voie d'entrée.

11. Olfactomètre selon l'une quelconque des revendications précédentes, dans lequel les moyens de circulation fluidique (4) sont agencés pour injecter les au moins deux fluides chacun à une extrémité (24, 25), dite extrémité distale (24, 25), d'une voie d'entrée (21, 22) distincte.

12. Olfactomètre selon la revendication précédente, comprenant un dispositif brise vagues par voie d'entrée (21, 23), ledit dispositif brise vagues :
- est disposé :
• dans ladite voie d'entrée, en vis-à-vis de l'extrémité distale (24, 25), ou
• en aval des moyens de circulation fluidiques (4), et/ou
• en amont de ladite extrémité distale,
- est agencé pour atténuer et/ou supprimer les vagues dans les voies (2).

13. Olfactomètre selon l'une quelconque des revendications précédentes, comprenant :
- une évacuation d'un mélange des au moins deux fluides située à une extrémité (26), dite extrémité distale (26), de la voie de mélange (23),
- une paroi (71), perméable aux fluides, empêchant le spécimen (8) d'accéder à l'évacuation.

14. Olfactomètre selon la revendication précédente, dans lequel l'évacuation est une évacuation par trop plein.

15. Olfactomètre selon l'une quelconque des revendications précédentes, dans lequel un fond de la voie de mélange (23) est, en tout ou partie, incliné de sorte qu'une section de ladite voie de mélange diminue dans le sens de la circulation des fluides dans ladite voie de mélange.

16. Olfactomètre selon l'une quelconque des revendications précédentes, dans lequel la voie de mélange (23) comprend un compartiment d'acclimatation (7), perméable aux fluides, agencé pour recevoir et contenir le spécimen (8), le dit compartiment d'acclimatation comprend une trappe mobile (72), perméable aux fluides, ladite trappe mobile étant agencée pour fermer et ouvrir, sélectivement, le compartiment d'acclimatation de sorte à :
- en position fermée, enfermer le spécimen dans la chambre d'acclimatation,
- en position ouverte, permettre au spécimen d'accéder à l'embranchement (3) et aux au moins deux voies d'entrée (21, 22).

17. Procédé d'étude comportementale de spécimen animal (8), dit procédé, ledit procédé comprend les étapes consistant à :
- mettre en circulation au moins deux fluides :
• chacun dans une voie distincte (2), dite voie d'entrée (21, 22), puis
• mélanger les au moins deux fluides dans une voie (2), dite voie de mélange (23),
les au moins deux voies d'entrée communiquant avec la voie de mélange par un embranchement,
- pour chaque voie d'entrée, former au moins une nappe laser (61), et pour chaque voie d'entrée considérée ladite nappe laser :
• traverse la voie d'entrée considérée, et
• s'étend sur l'ensemble d'une section de la voie d'entrée considérée,
- détecter chaque nappe laser ayant traversée une voie d'entrée.
